# EUROPEAN PATENT APPLICATION

(11) **EP 1 990 763 A1**
(43) Date of publication of application: **12.11.2008**
(21) Application number: 08002669.3
(22) Date of filing: 13.02.2008
(51) Int. Cl.: G06Q 30/00

(54) **Real-time advertisement displaying system and method thereof**

(30) Priority: 08.05.2007 TW 96116256
(71) Applicant: Coretronic Corporation, Hsinchu Hsin chu (TW)
(72) Inventor: Young, Jenn-Shoou, Chu-Nan 350 Miao-Li County (TW); Lee, Yung-Liang, Chu-Nan 350 Miao-Li County (TW)
(74) Representative: Wagner, Bernhard Peter

(57) **Abstract**

A method for displaying advertisements in a real-time manner includes the step of getting an external information having one of the image data and the audio data, the step of managing the external data, the step of generating triggered messages, the step of displaying the advertisements according to the triggered messages corresponding to the external data, and the step of recording a number of displayed times of the advertisements. With the abovementioned method, sights of observers may be significantly attracted by displayed advertisements.

## Description

### Background of the Invention

### 1. Field of the Invention

The present invention relates to a real-time displaying system and a method thereof, and more particularly, to a real-time advertisement displaying system for displaying contents on the basis of observer-related information and a method thereof.

### 2. Description of the Prior Art

Popular advertisement displays or displaying devices are often placed in populated places so that anyone passing by the advertisement displays or displaying devices may watch their contents easily. For example, in convenience stores, utilized advertisement displays may attract people just as well as huge advertisement displays placed in department stores. Such phenomenon also happens at stations of public transport and large stadiums. People are highly affected by rapidly displayed contents of these advertisement devices.

However, predetermined schedules are used in conventional advertisement displaying devices for displaying advertisements or other government declarations. And therefore, when observers walk near such advertisement displaying devices, advertisements or programs related to concerns of the observers are not dynamically displayed. Such phenomenon decreases the willingness of the observers to view the displayed contents of the advertisement displaying devices, and moreover, the advertisement effects on the observers are significantly decreased as well because of the lack of interaction with the observers.

### Summary of the Invention

The claimed invention discloses a real-time advertisement displaying method for improving defects of the prior art. The method comprises fetching an external information comprising at least one of an image datum and an audio datum, managing the external information, generating a first activating message corresponding to the external information, broadcasting at least one first advertisement corresponding to the external information in a real-time manner on the basis of the first activating message, recording a broadcast-related datum of the broadcasted first advertisement, and calculating a number of times for broadcasting the broadcasted first advertisement.

The claimed invention also discloses a real-time advertisement displaying method according to another preferred embodiment of the claimed invention. The method comprises fetching an external information, managing the external datum, generating an activating message corresponding to the external information, loading at least one advertisement corresponding to the activating message in an advertisement database on the basis of the activating message, broadcasting the advertisement in a real-time manner, recording broadcast-related datum of the broadcasted advertisement, and calculating a number of times for broadcasting the broadcasted advertisement. The external information comprises at least one of an image datum, an audio datum, and an external environment parameter. The external environment parameter comprises at least one of a temperature, humidity, and a degree of ultraviolet rays in surroundings.

The claimed invention discloses a real-time advertisement displaying system for improving defects of the prior art. The real-time advertisement displaying system comprises an image fetcher, an audio fetcher, a data management system, a data mining server, an event activating server, a scheduling server, a displaying device, and a log server. The image fetcher is used for fetching an image datum. The audio fetcher is used for fetching an audio datum. The data management system is coupled to both the image fetcher and the audio fetcher for managing the image datum and the audio datum. The data mining server is coupled to the data management system for performing data mining on at least one of the image datum and the audio datum to retrieve a corresponding characteristic. The event activating server is coupled to the data mining server for generating a corresponding first activating message on the basis of the retrieved characteristic. The scheduling server is coupled to the event activating server for broadcasting a plurality of advertisements in a predetermined order, and for displaying at least one advertisement corresponding to the retrieved characteristic after receiving the first activating message. The displaying device is coupled to the scheduling server for displaying the broadcasted advertisement. The log server is coupled to the displaying device for recording all advertisements displayed on the displaying device.

Other objectives, features and advantages of the present invention will be further understood from the further technology features disclosed by the present invention wherein there are shown and described preferred embodiments of this invention, simply by way of illustration of modes best suited to carry out the invention.

These and other objectives of the present invention will no doubt become obvious to those of ordinary skill in the art after reading the following detailed description of the preferred embodiment that is illustrated in the various figures and drawings.

### Brief Description of the Drawings

Fig. 1 is a flowchart of the real-time advertisement displaying method of the present invention.
Fig. 2 is a block diagram for implementing a preferred embodiment of the present invention according to the real-time advertisement displaying method shown in Fig. 1.

### Detailed Description

It is to be understood that other embodiments may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," and "coupled," and variations thereof herein are used broadly and encompass direct and indirect connections, couplings, and mountings.

The present invention discloses a real-time advertisement displaying system and a method thereof, where the disclosed advertisement displaying system displays contents in a real-time manner on the basis of related information of observers. A primary aim of the real-time advertisement displaying method of an embodiment of the present invention is to display advertisements related to concerns of observers, i.e., observer-related information, where contents of the displayed advertisements are related to characteristics of observers, surroundings of observers, interested characteristics of products and messages, or instructions and messages triggered by observers, all of which are detected by the advertisement displaying system. Therefore, contents of the advertisement displaying system may reach the effect of interacting with observers, attracting attention of observers, and meeting requirements of observers. Therefore, observer-related information includes related characteristics of observers around the advertisement displaying devices, surroundings of the observers, certain characteristics of messages and products noticed by observers, or instructions and messages on the advertisement displaying device triggered by observers. Note that the advertisement mentioned herein and hereafter includes various types of commercial advertisements, public welfare advertisements, government order declaration programs, or other informative programs introducing products or daily requirements. Besides, the real-time manner announced herein and hereafter indicates the situation that after the advertisement displaying system receives observer-related information, contents corresponding to the received observer-related information are displayed the advertisement displaying system.

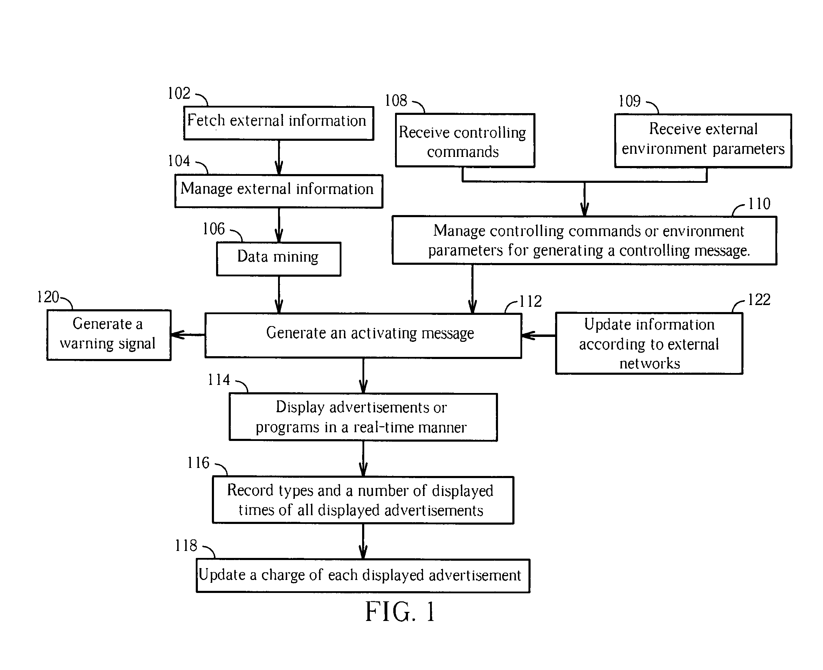

Please refer to Fig. 1, which is a flowchart of a real-time advertisement displaying method according to an embodiment of the present invention. The real-time advertisement displaying method of the embodiment includes steps as follows:
Step 102: Fetch external information, which includes at least one of image data and audio data or both.
Step 104: Manage external information, where related managements include recognizing, storing, and compressing the external information fetched in Step 102.
Step 106: Perform data mining, for retrieving image data, audio data, or information corresponding to at least one of the image data and the audio data.
Step 108: Receive controlling commands, for receiving a radio command or a triggered command generated by touching a touch panel.
Step 109: Receive external environment parameters for detecting a temperature, humidity, or a magnitude of ultraviolet rays in surroundings.
Step 110: Manage controlling commands or environment parameters, for storing, recognizing, or compressing the controlling commands received in Step 108 or the environment parameters received in Step 109, and for generating a controlling message corresponding to the received controlling commands or the received environment parameters.
Step 112: Generate an activating message, for generating the activating message in a real-time manner on the basis of the controlling message generated in Step 110, or on the basis of the image data, the audio data, or the information corresponding to at least one of the image data and the audio data generated in Step 106.
Step 114: Display advertisements or programs in a real-time manner on the basis of the activating message generated in Step 112.
Step 116: Record types and a number of displayed times of all displayed advertisements.
Step 118: Update a charge of each displayed advertisement on the basis of a corresponding number of displayed times.

Besides, in the abovementioned embodiment of the present invention, updated information may also be inputted from external networks for issuing an updated activating message, as shown in Step 112. In still another embodiment of the present invention, the real-time advertisement displaying method further includes Step 120: Generate a warning signal or an informing signal after the activating message is generated in Step 112 when particular behaviors of observers are detected by the real-time advertisement displaying system. For example, when an observer stares at a certain product, and when such a behavior is detected, the advertisement displaying system displays contents related to the stared product, or informs the shopkeeper about the behavior. Note that in other embodiments of the present invention, the activating message in Step 112 may be merely generated on the basis of at least one of or some of retrieved data in Step 106, the controlling commands in Step 108, and the external environment parameters in Step 109.

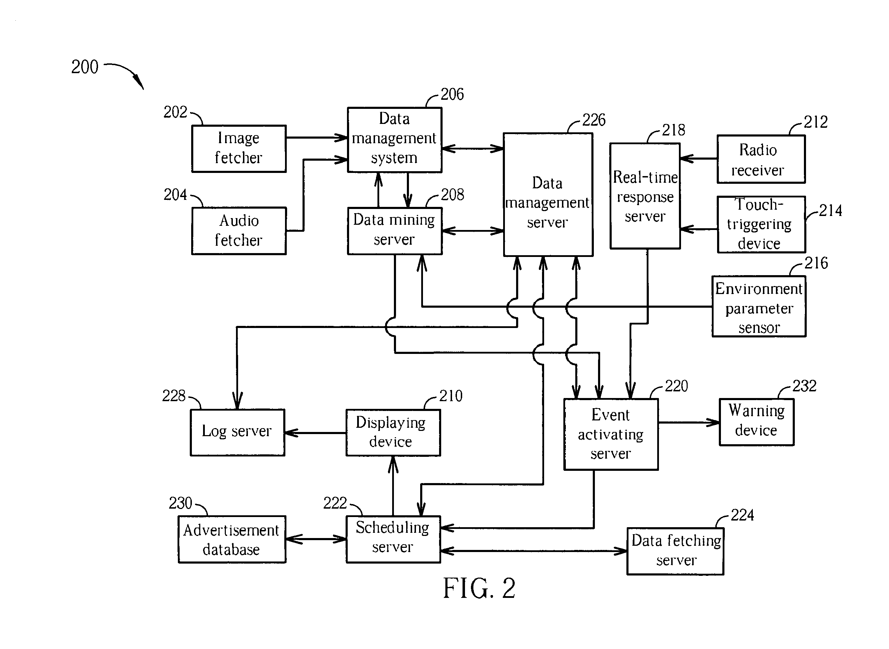

Please refer to Fig. 2, which is a block diagram for implementing the real-time advertisement displaying method shown in Fig. 1 according to a preferred embodiment of the present invention. As shown in Fig. 2, the real-time advertisement displaying system 200 includes an image fetcher 202, an audio fetcher 204, a data management system 206, a data mining server 208, a displaying device 210, a radio receiver 212, a touch-triggering device 214, an environment parameter sensor 216, a real-time response server 218, an event activating server 220, a scheduling server 222, a data fetching server 224, a data management server 226, a log server 228, and an advertisement database 230.

The image fetching device 202 is used for fetching image data generated around the real-time advertisement displaying system 200 so as to provide the image data for the data management system 206. The image fetching device 202 may be implemented with a conventional image recorder or a monitoring device, but is not limited to the listed implementations. The audio fetcher 204 is used for fetching audio data generated around the real-time advertisement displaying system 200 so as to provide the audio data for the data management system 206. The audio fetcher 204 may be implemented with a conventional audio collector or an audio recorder, but is not limited to the listed implementations. The data management system 206 is used for recognizing, storing (including temperately storing), or compressing image data and audio data fetched by the image fetcher 202 and the audio fetcher 204. The data management system 206 may include an image recognizing device, which is not illustrated herein, for recognizing particular image data on the basis of image data fetched by the image fetcher 202. The data management system 206 may further include an audio recognizing device, which is not illustrated herein, for recognizing particular voices on the basis of the audio data fetched by the audio fetcher 204. The data mining server 208 is used for browsing information managed by the data management system 206, i.e., data mining, so as to find out informative image data or informative audio data, i.e., informative characteristics. In a certain embodiment of the present invention, the data mining server 208 may transmit results of data mining to the data management system 206 as feedback references in recognitions, where the recognitions include comparisons between of the present image data and audio data and the previous one for forming the informative image data and informative audio data. The data mining server 208 also provides the informative image data and the informative audio data for the event activating server 220. The displaying device 210 is utilized for displaying advertisement on the basis of instructions of the scheduling server 222. The displaying device 210 may be implemented with a liquid crystal display, a plasma television, or another appropriate displaying device. The radio receiver 212 is utilized for receiving radio instructions issued by observers, where the radio instructions may be transmitted through infrared signals, which are generated from an infrared remote controller, blue tooth signals, which are generated from a laptop, a personal digital assistant (PDA) or a mobile phone, wireless local area network (WLAN) signals, radio frequency (RF) signals, or other available signals for transmitting radio instructions. The touch-triggering device 214 is equipped on or around the displaying device 210, for detecting any radio instructions triggered by touching the touch-triggering device 214. The environment parameter sensor 216 is utilized for detecting a temperature, humidity, or a magnitude of ultraviolet rays around the real-time advertisement displaying system 200, and for transmitting the detected data to the data mining server 208 for generating related controlling messages or characteristics. The real-time response server 218 is utilized for implementing managements including storage, recognitions, or compressions, on the basis of radio instructions received by the radio receiver 212 or instructions detected by the touch-triggering device 214, for generating a controlling message, and for transmitting the controlling message to the event activating server 220. The purpose of the real-time response server 218 is to respond to direct requirements of observers, such as instructions issued from the observers, and to retrieve and download related messages from databases or networks, which are linked to the real-time response server 218 and are not illustrated herein, on the basis of requirements of observers. The event activating server 220 is utilized for generating an activating message on the basis of the informative image data and the informative audio data transmitted from the data mining server 208, or on the basis of the controlling message transmitted from the real-time response server 218, for responding to events corresponding to the informative image/audio data and the controlling message. The scheduling server 222 is utilized for instructing the displaying device 210 to broadcast the desired advertisements or programs in a real-time or predetermined manner. The predetermined manner indicates the fact that the scheduling server 222 instructs the displaying device 210 to broadcast the desired advertisements and programs on the basis of a predetermined order in a predetermined broadcasting schedule of advertisements and programs. Such a predetermined style lacks interactions with observers, though, the predetermined schedule is still a primary guide for instructing the displaying device 212 while no accidental or addition event is detected. Besides, such a real-time style indicates the fact that the scheduling server 222 instructs the displaying device 210 to display advertisements, which are required by or related to observers, on the basis of events indicated by the activating message transmitted from the event activating server 220, for interacting with observers. The data fetching server 224 is utilized for exchanging data with remote targets of the real-time advertisement displaying system 200 for updating necessary real-time information or advertisements, where the remote targets may include other data servers or databases. The data fetching server 224 may also be served as an agent for retrieving displayed advertisements of the displaying device 210 instructed by the scheduling server 222 in a real-time manner or in a predetermined manner. The data management server 226 is utilized for coordinating operations among primary elements of the real-time advertisement displaying system 200 so as to prevent priority hazards among the primary elements. The data management server 226 may also be served as an agent for exchanging messages among the primary elements of the real-time advertisement displaying system 200. The log server 228 is utilized for recording types and numbers of times of displayed advertisements on the displaying device 210 so as to provide reference data associated with charging for the displayed advertisements. The advertisement database 230 is utilized for storing advertisements to be displayed so that the scheduling server 222 may instruct the displaying device 210 to retrieve advertisements from the advertisement database 230 for displaying on the basis of a predetermined schedule. Contents stored in the advertisement database 230 may also be observer-related so as to be displayed in a dynamic correspondence with observers.

In an embodiment of the present invention, the data mining server 208 is not included in the real-time advertisement displaying system 200 so that the event activating server 220 is directly provided with image data and audio data stored (even temperately stored) in the data management system 206. In another embodiment of the present invention, both the radio receiver 212 and the touch-triggering device 214 are not included (or not simultaneously included) in the real-time advertisement displaying system 200. In this embodiment, the real-time response server 218 is not included in the real-time advertisement displaying system 200 as well.

For more detailed descriptions of the real-time advertisement displaying method disclosed in Fig. 1, the following descriptions are disclosed on the basis of the real-time advertisement displaying system 200 shown in Fig. 2.

In Step 102, images and sounds around the real-time advertisement displaying system 200 are fetched. In Step 104, image data and audio data having specific characteristics are recognized from the fetched images and sounds. The images around the real-time advertisement displaying system 200 are fetched by the image fetcher 202, and the image data having specific characteristics are recognized by the data management system 206 for retrieving observer-related and informative image data. Similarly, the sounds around the real-time advertisement displaying system 200 are fetched by the audio fetcher 204, and the desired audio data are extracted by filtering off non-informative sounds and recognizing sounds carrying specific key words with the aid of the data management system 206. The primary aim of Step 102 and Step 104 is to fetch informative characteristics around or carried by observers around the real-time advertisement displaying system 200 so as to provide reference data associated with broadcasting information, which is attractive to observers, by the real-time advertisement displaying system 200 in a real-time manner. For example, when an observer carries products having a specific trademark, the specific trademark may be fetched by the image fetcher 202 and recognized by the data management system 206, and the real-time advertisement displaying system 200 broadcasts advertisements or programs related to the specific trademark for attracting attention of the observer, where the specific trademark acts as an informative characteristic. When the image fetcher 202 detects the fact that an observer focuses his sights on a certain product by scanning eyes of the observer, the real-time advertisement displaying system 200 may also display related information of the certain product on the displaying device 210, where the image fetcher 206 is set to search for image characteristics on sights of the observer by the data mining server 210. When speeches of observers indicate names of certain products as key words, the audio fetcher 204 fetches sounds carrying the key words, the data management system 206 recognizes the key words within the fetched sounds, and the real-time advertisement displaying system 200 broadcasts advertisements or programs related to the key words for attracting the observers giving off the speeches. Characteristics utilized by the data management system 206 for recognizing image data and audio data may be determined by the data mining sever 208. Therefore, the characteristics utilized by the data management system 206 may be updated by the data mining server 208 in a real-time manner. In another embodiment of the present invention, the utilized characteristics of the data management system 206 may also be determined by comparison data stored in the data management system 206. Besides recognizing image data and audio data having specific characteristics, the data management system 206 may also be utilized for storing the recognized image data and audio data for broadcasting advertisements or generating statistics for the purpose of data mining, where the recognized image data and audio data may be compressed for better usage in storage. Since the image data and the audio data are fetched from accidental situations, in Step 112, the stored and recognized image data and audio data of the data management system 206 are regarded as accidental events, and the data mining server 208 generates messages corresponding to the accidental events and transmits the generated messages to the event activating server 220. In Step 114, the event activating server 220 generates an activating message corresponding to the message of an accidental event, that is to say, the fetched image data and the fetched audio data, and instructs the scheduling server 222 on the basis of the activating message, where the instructions include loading advertisements corresponding to the event from the advertisement database 230, retrieving data corresponding to the event with the aid of the data fetching server 224, and broadcasting the loaded advertisements with the displaying device 210, for reaching the aim of displaying advertisement related to characteristics attractive to observers in a real-time manner.

Besides, as described in Step 120, in one embodiment of the present invention, some accidents may also be prevented. When characteristics referring to emergent accidents are adopted, and when the data mining server 208 or the data management system 206 detects such characteristics, the data management server 226 instructs the event activating server 220 to transmit a corresponding message to a warning device 232 so as to issue an adequate warning message, which is then utilized for warning people in charge of accidents. For example, when the real-time advertisement displaying system 200 is equipped in a convenience store, and when the image fetcher 202 fetches visual characteristics referring to smokes or sparkles so that the data mining server 208 detects such characteristics in time, the data management server 226 instructs the event activating server 220 to activate the warning device 232. Then the warning device 232 generates a corresponding warning message, i.e., go to Step 112, and the scheduling server 222 instructs the displaying device 210 to display the warning message or transmits the warning message to inform firemen so that certain public disasters may thus be prevented. Similarly, when the audio fetcher 204 fetches characteristics carrying explosive sounds, and when the data mining server 208 detects such characteristics, the data management server 226 instructs the event activating server 220 to order the warning device 232 to issue warning messages to both the shopkeeper and the firemen for preventing certain public disasters, such as robbery or fire accidents. Moreover, image data fetched by the image fetcher 202 may also be utilized to recognize thieves nearby.

For observers, besides from observers themselves or informative characteristics, attractive characteristics may also be extracted from other chosen or objective information of observers. Therefore, if advertisements may be displayed on the basis of such chosen or objective information, the effect of interacting with observers is achieved, where Step 108 is performed under such concepts. In Step 108, an observer may directly issue commands to request required advertisements for displaying the requested advertisements on the displaying device 210. The radio receiver 212 may be utilized to receive remote commands, which are carried by infrared signals, Bluetooth signals, WLAN signals, and radio frequency signals issued from a remote controller, such as an infrared remote controller, a laptop, a PDA, a cell phone, or another portable radio devices, so that an observer may choose desired advertisements listed in an advertisement list displayed on the displaying device 210. A remote command may also be a query so that an observer may query specific information and read the queried information on the displaying device 210 for interacting with the observer. Besides, a controlling command may be generated on the basis of an environmental parameter, which may be a surrounding temperature, humidity, or a magnitude of ultraviolet rays around the real-time advertisement displaying system 200, where the environmental parameter is detected by the environment parameter sensor 216. Then the controlling command serves as reference data associated with displaying advertisements on the displaying device 210. Note that the environmental parameter is classified as one type of external information. For example, when the detected temperature around the real-time advertisement displaying system 200 is higher than a standard temperature, advertisements or programs related to ice creams are displayed immediately. Otherwise, when the detected temperature is lower than the standard temperature, advertisements or programs related to down suits or warm-keeping topics might also be displayed immediately. When the abovementioned fire accident occurs, the over high temperature detected by the environment parameter sensor 216 is referenced to generate a corresponding warning message. Besides, a touch-triggering device 214 may be disposed on a screen of the displaying device 210 or around the displaying device 210 so as to receive a triggered command from the touch-triggering device 214, where the triggered command is used for indicating a displayed advertisement or queried information on the displaying device 210. For example, the touch-triggering device 214 may utilized to detect heartbeats or blood pressures of observers, then advertisements or programs related to medical information or health foods may be displayed immediately as responses to the observers. In Step 110, the real-time response server 218 generates a controlling message on the basis of the radio command, which is received in Step 108, or on the basis of the command issued from the touch-triggering device 214, and transmits the controlling message to the event activating server 220. Considering both Step 109 and Step 110, a corresponding controlling message is generated in the data mining server 208 on the basis of the environmental parameter received in Step 109. In Step 112, after the event activating server 220 receives the controlling message, an activating message is generated corresponding to the accidental event related to the controlling message, and is transmitted to the scheduling server 222. At last, in Step 114, the scheduling server 222 loads advertisements related to the activating message from the advertisement database 230, and instructs the displaying device 210 to display the loaded advertisements immediately, for reaching the aim of attracting observers.

Based on the fact that the number of displayed times of an advertisement is primary reference data associated with charging for the displayed advertisement, in Step 116, the log server 228 records numbers of displayed times of various advertisements, and in Step 118, charges for the displayed advertisements may be updated accordingly.

In Step 122, external information of the real-time advertisement displaying system 200 is retrieved from the data fetching server 224 so as to display related programs or advertisements in a real-time manner. Therefore, with the aid of the external information retrieved from the data fetching server 224, a built-in schedule of the scheduling server 222 may be easily updated. Moreover, when the displaying device 210 displays advertisements and programs on the basis of predetermined instructions of the scheduling server 222, the displayed contents and the built-in schedule may be still updated. When the data fetching server 224 fetches critical external information, step 122 may also include making the scheduling server 222 instruct the displaying device 210 to display programs related to the critical external information immediately. External information from other remote real-time advertisement displaying systems 200 also acts as reference data associated with making the scheduling server 222 instruct the displaying device 210 to display advertisements by following Step 122. Therefore, a local real-time advertisement displaying system 200 may not only display related advertisements on the basis of the changes in the surroundings thereof, but also display related advertisements on the basis of the messages taken from other remote real-time advertisement displaying system 200.

A real-time advertisement displaying system and a related method are disclosed in the present invention for displaying advertisements on the basis of attractive characteristics or related characteristics of observers. According to an embodiment of the present invention, interactions of conventional advertisement displaying systems with observers are significantly improved so as to raise impacts of displayed advertisements on observers. Distractions to observers, which would occur in displaying predetermined advertisements, are reduced in an embodiment of the present invention. Moreover, certain accidents or theft may be prevented in an embodiment of the present invention as well.

The foregoing description of the preferred embodiment of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like is not necessary limited the claim scope to a specific embodiment, and the reference to particularly preferred exemplary embodiments of the invention does not imply a limitation on the invention, and no such limitation is to be inferred. The invention is limited only by the spirit and scope of the appended claims. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

Those skilled in the art will readily observe that numerous modifications and alterations of the device and method may be made while retaining the teachings of the invention.

## Claims

1. A real-time advertisement displaying method comprising:
fetching an external information, which comprises at least one of an image datum and an audio datum;
managing the external information;
generating a first activating message corresponding to the external information;
broadcasting at least one first advertisement corresponding to the external information in a real-time manner on the basis of the first activating message;
recording a broadcast-related datum of the broadcasted first advertisement; and
calculating a number of times for broadcasting the broadcasted first advertisement.

2. The real-time advertisement displaying method of claim 1 further comprising:
performing data mining on the external information for retrieving a characteristic related to the external information.

3. The real-time advertisement displaying method of claim 2 wherein managing the external information comprises:
recognizing the characteristic on the external information.

4. The real-time advertisement displaying method of claim 3 further comprising:
issuing a warning message on the basis of the external information.

5. The real-time advertisement displaying method of claim 1 further comprising:
updating a charge of the advertisement on the basis of the recorded broadcast-related datum and the calculated number of times for broadcasting the advertisement.

6. The real-time advertisement displaying method of claim 1 further comprising:
receiving a controlling command;
managing the controlling command for generating a controlling message corresponding to the controlling command;
generating a second activating message on the basis of the controlling command;
displaying at least one second advertisement corresponding to the second activating message in a real-time manner on the basis of the second activating message;
recording a broadcast-related datum of the broadcasted second advertisement;
calculating a number of times for broadcasting the broadcasted second advertisement; and
updating a charge of the broadcasted second advertisement on the basis of the recorded broadcast-related datum of the broadcasted second advertisement and the calculated number of times for broadcasting the broadcasted second advertisement.

7. The real-time advertisement displaying method of claim 6 further comprising:
receiving an external environment parameter for detecting at least one of a temperature, humidity, and a degree of ultraviolet rays in surroundings;
managing the external environment parameter for generating a controlling message corresponding to the external environment parameter;
generating a third activating message on the basis of the controlling message corresponding to the external environment parameter;
broadcasting at least one third advertisement corresponding to the third activating message in a real-time manner on the basis of the third activating message;
recording a broadcast-related datum of the broadcasted third advertisement;
calculating a number of times for broadcasting the broadcasted third advertisement; and
updating a charge of the third advertisement on the basis of the recorded broadcast-related datum of the third advertisement and the calculated number of times for broadcasting the third advertisement.

8. The real-time advertisement displaying method of claim 1 further comprising:
receiving a network information updated in a real-time manner; and
broadcasting a fourth advertisement corresponding to the received network information on the basis of the real-time updated network information.

9. A real-time advertisement displaying method comprising:
fetching an external information, which comprises at least one of an image datum, an audio datum, and an external environment parameter, wherein the external environment parameter comprises at least one of a temperature, humidity, and a degree of ultraviolet rays in surroundings;
managing the external information;
generating an activating message corresponding to the external information;
loading at least one advertisement corresponding to the activating message in an advertisement database on the basis of the activating message;
broadcasting the advertisement in a real-time manner;
recording broadcast-related datum of the broadcasted advertisement; and
calculating a number of times for broadcasting the broadcasted advertisement.

10. The real-time advertisement displaying method of claim 9 further comprising:
updating a charge of the broadcasted advertisement on the basis of the recorded broadcast-related datum and the calculated number of times for broadcasting the broadcasted advertisement.

11. A real-time advertisement displaying system comprising:
an image fetcher for fetching an image datum;
an audio fetcher for fetching an audio datum;
a data management system coupled to both the image fetcher and the audio fetcher for managing the image datum and the audio datum;
a data mining server coupled to the data management system for performing data mining on at least one of the image datum and the audio datum to retrieve a corresponding characteristic;
an event activating server coupled to the data mining server for generating a corresponding first activating message on the basis of the retrieved characteristic;
a scheduling server coupled to the event activating server for broadcasting a plurality of advertisements in a predetermined order, and for displaying at least one advertisement corresponding to the retrieved characteristic after receiving the first activating message;
a displaying device coupled to the scheduling server for displaying the broadcasted advertisement; and
a log server coupled to the displaying device for recording all advertisements displayed on the displaying device.

12. The real-time advertisement displaying system of claim 11 wherein the image fetcher is a camera, a video recorder, or a monitor.

13. The real-time advertisement broadcasting system of claim 12 wherein the audio fetcher is an audio collector or a tape recorder.

14. The real-time advertisement displaying system of claim 11 wherein the data management system is utilized for storing and recognizing the image datum and the audio datum.

15. The real-time advertisement displaying system of claim 11 further comprising:
an environment parameter sensor for detecting an environment parameter around the real-time advertisement displaying system; and
a real-time response server coupled to the environment parameter sensor for receiving the environment parameter, and for issuing a first controlling message corresponding to the environment parameter;
wherein the event activating server receives the first controlling message, and issues a second activating message related to the first controlling message in a real-time manner so that the scheduling server broadcasts at least one advertisement corresponding to the second activating message after receiving the second activating message.

16. The real-time advertisement displaying system of claim 15 further comprising:
a radio receiver coupled to the real-time response server for receiving a controlling command issued from a radio signal transmitting device, and for transmitting the controlling command to the real-time response server so that the real-time response server issues a second controlling message corresponding to the controlling command;
wherein the event activating server issues a third activating message right after receiving the second controlling message so that the scheduling server broadcasts at least one advertisement corresponding to the third activating message after receiving the third activating message.

17. The real-time advertisement displaying system of claim 16 further comprising: a touch-triggering device coupled to the real-time response server for receiving a command triggered from the touch-triggering device, and for transmitting the received command to the real-time response server.

18. The real-time advertisement displaying system of claim 11 further comprising:
an advertisement database for storing a plurality of advertisements so as to provide the stored plurality of advertisements to the scheduling server to broadcast in a real-time manner or in a predetermined manner.

19. The real-time advertisement displaying system of claim 18 further comprising:
a data fetching server for fetching information outside the real-time advertisement displaying system to update contents stored in the advertisement database.

20. The real-time advertisement displaying system of claim 11 further comprising:
a data fetching server for fetching an advertisement being external to the real-time advertisement displaying system and corresponding to the characteristic.

21. The real-time advertisement displaying system of claim 11 further comprising:
a warning device coupled to the event activating server to generate a warning message on the basis of the first activating message.

22. The real-time advertisement displaying system of claim 15 further comprising:
a management server coupled to the data mining server, the data management system, the scheduling server, the real-time response server, and the event activating server, for controlling and coordinating operations between the data mining server, the data management system, the scheduling server, the real-time response server, and the event activating server.
